# EUROPÄISCHE PATENTSCHRIFT

(11) **EP 3 771 616 B1**
(45) Veröffentlichungstag und Bekanntmachung des Hinweises auf die Patenterteilung: **31.01.2024**
(21) Anmeldenummer: 20184400.8
(22) Anmeldetag: 07.07.2020
(51) Int. Cl.: B62B 3/06

(54) **FLURFÖRDERZEUG, INSBESONDERE HUBWAGEN**
INDUSTRIAL TRUCK, IN PARTICULAR JACK LIFT
CHARIOT DE MANUTENTION, EN PARTICULIER CHARIOT ÉLÉVATEUR

(30) Priorität: 29.07.2019 DE 102019120395
(43) Veröffentlichungstag der Anmeldung: 03.02.2021
(73) Patentinhaber: Linde Material Handling GmbH, 63743 Aschaffenburg (DE)
(72) Erfinder: PROUST, Freddy, 86230 Serigny (FR)
(74) Vertreter: Patentship Patentanwaltgesellschaft

(56) Entgegenhaltungen:
- DE-A1- 1 431 709
- DE-A1- 2 318 048
- DE-A1-102005 006 854
- US-A1- 2008 164 101

## Beschreibung

Die Erfindung betrifft ein Flurförderzeug, insbesondere Hubwagen, mit einem Antriebsteil, das mindestens ein gelenktes Rad aufweist, und einem zumindest einen Lastarm und ein Batteriefach umfassenden Lastteil, wobei der Lastarm an der Spitze mit einer Lastrolleneinrichtung versehen ist, wobei sich das Flurförderzeug mittels des am Antriebsteil angeordneten gelenkten Rades und der an der Spitze des Lastarms angeordneten Lastrolleneinrichtung auf einer Fahrbahn abstützt, wobei der Lastteil mittels einer Initialhubvorrichtung relativ zum Antriebsteil anhebbar und absenkbar ist, wobei die Lastrolleneinrichtung über einen Lastrollenhebel schwenkbar am Lastarm angeordnet ist, wobei die Initialhubvorrichtung zum Anheben des Lastarms ein mit dem Lastrollenhebel in Wirkverbindung stehendes Gestänge und einen das Gestänge betätigenden Betätigungshebel umfasst.

Aus der DE 23 18 048 A1 ist ein gattungsgemäßes Flurförderzug mit den Merkmalen des Oberbegriffs des Patentanspruchs 1 bekannt. Bei dem aus der DE 23 18 048 A1 bekannten Flurförderzeug ist der Betätigungshebel der Initialhubvorrichtung auf einer Welle des Batteriefachs gelagert.

Die DE 14 31 709 A1 offenbart einen Hochhubwagen mit einem Antriebsteil, der mit einem Batteriefach und mit einem gelenkten Rad versehen ist, und mit einem Lastteil, der mittels einer Initialhubvorrichtung anhebbare Lastarme und einen Hubmast aufweist. Das Lastteil weist ein Winkeleisen auf, an dessen Vorderseite eine vertikal nach unten verlaufende Platte angeschweißt ist. An das Winkeleisen ist weiterhin der Mast angeschweißt. Unterhalb des horizontalen Schenkels des Winkeleisen und der vertikalen Platte sind Verstrebungsplatten angeschweißt, in denen eine Welle gelagert ist, die die Betätigungshebel der Initialhubvorrichtung lagert.

Die US 2008/164101 A1 offenbart ein Flurförderzeug mit einem Antriebsteil, das mindestens ein gelenktes Rad aufweist. An dem Antriebsteil ist ein Hubmast angeordnet, an dem eine Lastgabel anhebbar und absenkbar angeordnet ist. Die Lastgabel umfasst einen Gabelrücken und an dem Gabelrücken angeordnete Lastarme. Die hinteren Enden der Lastarme sind an dem Gabelrücken befestigt. An den vorderen Enden der Lastarme sind Lastrollen angeordnet, die über Gestänge und einen Betätigungshebel betätigt sind, wobei der Betätigungshebel auf einer Welle drehbar gelagert ist, die am Gabelrücken befestigt ist.

Die DE 10 2005 006 854 A1 offenbart ein Flurförderzug mit einem Antriebsteil und einem Lastteil, das einen Lastrahmen umfasst, bei dem ein Umlenkhebel einer Initialhubvorrichtung an dem Lastrahmen mittels eines Schwenklagers schwenkbar gelagert ist.

Bekannte gattungsgemäße Flurförderzeuge mit Lastarmen dienen dazu, mit den Lastarmen unter einen Ladungsträger, beispielsweise eine Palette, eine Gitterbox oder einen Rollenkäfig, zu fahren und den Ladungsträger anzuheben. Zum Anheben des Ladungsträgers werden hierbei die Lastarme angehoben. Hierzu wird der Lastteil relativ zu dem Antriebsteil mittels der Initialhubvorrichtung angehoben, wobei schwenkbar an den Lastarmen angeordnete Lastrollenhebel, in denen die Lastrolleneinrichtungen drehbar gelagert sind, über den Betätigungshebel und die Gestänge betätigt werden, um die Lastarme anzuheben. Mit der Initialhubvorrichtung können die Lastarme in der Regel um 10 bis 20 cm angehoben werden. Gattungsgemäße Flurförderzeug mit einer Initialhubvorrichtung zum Anheben der Lastarme können als Hubwagen, beispielsweise Niederhubwagen oder Hochhubwagen, oder als Kommissionierer ausgebildet sein.

Bei bekannten gattungsgemäßen Flurförderzeugen ist der Betätigungshebel an dem Batteriefach um eine Schwenkachse schwenkbar gelagert. An dem Batteriefach sind hierzu entsprechende Lagerflansche befestigt, in denen der Betätigungshebel schwenkbar gelagert ist. Bei bekannten gattungsgemäßen Flurförderzeugen bestehen oftmals verschiedene Varianten von Batteriefächern, die sich beispielsweise hinsichtlich der Größe für eine aufzunehmende Traktionsbatterie (Größenvarianten) unterscheiden, um Kunden eine für die jeweiligen Einsatzfall passende Größe der Traktionsbatterie bieten zu können. Weiterhin bestehen bei bekannten gattungsgemäßen Flurförderzeugen oftmals verschiedene Varianten von Lastteilen, die sich hinsichtlich des seitlichen Abstandes der beiden Lastarme unterscheiden (Untervarianten). Sofern an dem entsprechenden Batteriefach die Betätigungshebel schwenkbar gelagert sind und das Batteriefach hierzu mit entsprechenden Lagerflanschen versehen ist, ergibt sich ein hohe Anzahl von Varianten von Batteriefächern, da für jede Größenvariante des Batteriefachs auch entsprechende Untervarianten von Batteriefächern bereit gestellt werden müssen, die sich hinsichtlich des seitlichen Abstandes der an dem Batteriefach angeordneten Lagerflansche für die Betätigungshebel unterscheiden, um die verschiedenen Varianten von Lastteilen mit unterschiedlichen seitlichen Abständen der Lastarme herstellen zu können. Diese hohe Variantenanzahl von Batteriefächern führt zu einem hohen Entwicklungsaufwand. Weiterhin führt die hohe Variantenanzahl von Batteriefächern bei dem Hersteller der Flurförderzeuge zu einem hohen logistischen Aufwand, da eine entsprechend hohe Anzahl verschiedener Batteriefachvarianten zwischengelagert werden muss, was entsprechend hohe Lagerkapazitäten zur Folge hat. Eine entsprechend hohe Anzahl verschiedener Batteriefachvarianten hat weiterhin eine entsprechend hohe Anzahl an verschiedenen Teilenummern zur Folge. Zudem ist die Produktionsplanung mit einer Vorproduktion von Batteriefächern bzw. Lastteilen erschwert, da nicht vorhergesehen werden kann, welche Batteriefachvarianten (Größe des Batteriefachs, seitlicher Abstand der Lagerflansche für die Betätigungshebel) von Kunden zukünftig in welcher Stückzahl angefordert werden. Zudem ist es bei bekannten gattungsgemäßen Flurförderzeugen schwer zu managen, spezielle Kundenoptionen zu erfüllen, bei denen Kunden Lastteile mit einem speziellen seitlichen Abstand der Lastarme benötigen, da diese die Entwicklung eines kundenspezifischen Batteriefachs erfordert.

Der vorliegenden Erfindung liegt die Aufgabe zugrunde, ein gattungsgemäßes Flurförderzeug zur Verfügung zu stellen, das hinsichtlich der genannten Nachteile verbessert ist.

Diese Aufgabe wird erfindungsgemäß dadurch gelöst, dass der Betätigungshebel an einem an dem Lastarm ausgebildeten Lagerflansch drehbar gelagert ist.

Bei dem erfindungsgemäßen Flurförderzeug ist somit der Betätigungshebel direkt an dem Lastarm an einem entsprechenden Lagerflansch des Lastarmes drehbar gelagert. Dies führt dazu, dass das Batteriefach im Aufbau einfacher ausgeführt werden kann, da an dem Batteriefach keine entsprechenden Lagerflansche für die Betätigungshebel erforderlich sind. Dies führt weiterhin zu einer Verringerung der Variantenzahl der Batteriefächer, da nur noch verschiedene Varianten von Batteriefächern, die sich beispielsweise hinsichtlich der Größe für eine aufzunehmende Traktionsbatterie (Größenvarianten) unterscheiden, vorgehalten und entwickelt werden müssen. Ein unterschiedlicher seitlicher Abstand der beiden Lastarme für entsprechende Untervarianten von verschiedenen Lastteilen, die sich hinsichtlich des seitlichen Abstands der beiden Lastarme unterscheiden, kann in einfacher Weise durch die entsprechende seitlich beabstandete Positionierung der mit den Lagerflanschen für die Betätigungshebel versehenen Lastarme an dem entsprechenden Batteriefach hergestellt werden. Diese verringerte Variantenanzahl von Batteriefächern führt zu einem verringerten Entwicklungsaufwand und einer schnelleren Entwicklung der erforderlichen Varianten. Weiterhin führt die verringerte Variantenanzahl von Batteriefächern bei dem Hersteller der Flurförderzeuge zu einem verringerten logistischen Aufwand, da eine deutlich verringerte Anzahl verschiedener Batteriefachvarianten zwischengelagert werden muss, was verringerte Lagerkapazitäten zur Folge hat. Eine entsprechend verringerte Variantenanzahl an Batteriefächern führt weiterhin zu einer verringerten Anzahl an verschiedenen Teilenummern. Mit der verringerten Variantenanzahl an Batteriefächern wird weiterhin die Produktionsplanung mit einer Vorproduktion von Batteriefächern erleichtert, da die entsprechenden Größenvarianten der Batteriefächer es ermöglichen, alle seitlichen Abstände der Lastarme abzudecken. Der Produktionsprozess der Flurförderzeuge wird dadurch optimiert und flexibler. Zudem sind mit der Erfindung spezielle Kundenoptionen leicht umzusetzen, bei denen Kunden Lastteile mit einem speziellen seitlichen Abstand der Lastarme benötigen, da diese in einfacher Weise durch entsprechende seitlich beabstandete Positionierung der Lastarme an dem entsprechenden Batteriefach hergestellt werden.

Gemäß einer bevorzugten Ausgestaltungsform der Erfindung ist das Batteriefach mit einer Bodenfläche auf die Oberseite des Lastarms aufgesetzt und an der Oberseite des Lastarms befestigt, insbesondere verschweißt. Dies ermöglicht es auf einfache Weise aus den mit den Lagerflanschen der Betätigungshebel versehenen Lastarmen und einem entsprechenden Batteriefach einen Lastteil des Flurförderzeugs herzustellen.

Bevorzugt ist der Lastarm an einem dem Antriebsteil zugewandten Ende mit dem Lagerflansch versehen. Der Lagerflansch kann an einem Ende des Lastarms mit geringem Bauaufwand ausgebildet werden.

Der Lagerflansch umfasst gemäß einer vorteilhaften Ausführungsform der Erfindung zwei seitlich beabstandete Flanschelemente. Zwischen zwei Flanschelementen kann der Betätigungshebel auf einfache und sichere Weise schwenkbar gelagert werden.

Bevorzugt sind die Flanschelemente als Schmiedeteil ausgebildet, die mit dem Lastarm verschweißt sind. Als Schmiedeteile ausgebildete Flanschelemente ermöglichen es auf einfache Weise, an dem Lastarm einen stabilen und verschleißbeständigen Lagerflansch für den Betätigungshebel auszubilden. Sofern die Flanschelemente mit dem Lastarm verschweißt sind, können die Flanschelemente in einfacher und sicherer Weise an dem Lastarm befestigt werden.

Gemäß einer Weiterbildung der Erfindung weisen die Flanschelemente jeweils eine vertikale Anschlussfläche und eine horizontale Anschlussfläche auf, mit denen die Flanschelemente an dem Batteriefach verschweißt sind. Dies ermöglicht eine sichere und stabile Befestigung der Flanschelemente an dem aus den Lastarmen und dem Batteriefach zusammengesetzten Lastteil.

Das Batteriefach weist hierzu gemäß einer vorteilhaften Ausgestaltungsform eine vertikale Anschlussfläche und eine horizontale Anschlussfläche auf, wobei die vertikale Anschlussfläche des Flanschelements mit der vertikalen Anschlussfläche des Batteriefachs und die horizontale Anschlussfläche des Flanschelements mit der horizontalen Anschlussfläche des Batteriefachs verschweißt ist. Dies ermöglicht eine sichere und stabile Befestigung der Flanschelemente an dem aus den Lastarmen und dem Batteriefach zusammengesetzten Lastteil, wobei durch das Verschweißen eine sichere und stabile Befestigung der Flanschelemente an dem aus den Lastarmen und dem Batteriefach zusammengesetzten Lastteil erzielt wird.

Die Erfindung betrifft weiterhin ein Verfahren zur Herstellung eines Lastteils eines erfindungsgemäßen Flurförderzeugs mit den folgenden Schritten:
- Herstellen der Lastarme durch Befestigen der Lagerflansche an den Lastarmen;
- Zusammenpaaren von zwei Lastarmen mit einem Batteriefach unter Ausbildung eines individuellen seitlichen Abstandes der beiden Lastarme;
- Befestigen der Lastarme an dem Batteriefach.

Durch das Zusammenpaaren von zwei Lastarmen, die zuvor mit den Lagerflanschen für den Betätigungshebel versehen wurden, mit einem Batteriefach unter Ausbildung eines individuellen seitlichen Abstandes der beiden Lastarme und anschließendem Befestigen der Lastarme an dem Batteriefach können auf einfache Weise unter Verwendung einer Variante eines Batteriefachs, beispielsweise einer Größenvariante eines Batteriefachs, alle Untervarianten von Lastteilen mit unterschiedlichen seitlichen Abständen der Lastarme und Kundenoptionen mit speziellem seitlichen Abstand der Lastarme erzeugt und hergestellt werden, ohne entsprechende Untervarianten von unterschiedlichen Batteriefächern zu benötigen.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer schematischen Seitenansicht,
- Figur 2: einen Lastarm des erfindungsgemäßen Flurförderzeugs mit einem Lagerflansch des Betätigungshebels in einer perspektivischen Darstellung,
- Figur 3: zwei mit jeweils einem Lagerflansch versehene Lastarme und ein Batteriefach des erfindungsgemäßen Flurförderzeugs vor dem Zusammenbau zu einem Lastteil,
- Figur 4: die Figur 3 nach dem Zusammenbau der mit den Lagerflanschen versehenen Lastarme und dem Batteriefach zu einem Lastteil,

- Figur 5: die Figur 4 mit an den Lagerflanschen der Lastarme angebauten Betätigungshebeln und
- Figur 6: verschiedene durch die Erfindung herstellbare Varianten von Lastteilen mit unterschiedlichen seitlichen Abständen der beiden Lastarme.

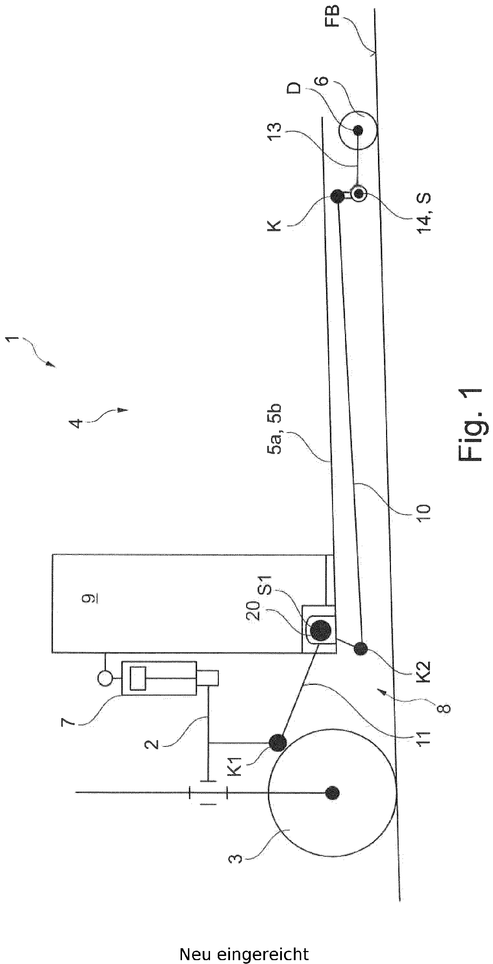

In den Figur 1 ist ein erfindungsgemäßes Flurförderzeug 1 in einer schematischen Seitenansicht dargestellt.

Das in der Figur 1 dargestellte Flurförderzeug 1 ist als Hubwagen, beispielsweise Niederhubwagen, ausgebildet. Das Flurförderzeug 1 ist als ein batterie-elektrisch betriebenes Flurförderzeug 1 ausgebildet.

Das Flurförderzeug 1 weist einen Antriebsteil 2 auf, der mit einem lenkbaren Rad 3 versehen ist, und einen relativ zum Antriebsteil 2 mittels einer Initialhubvorrichtung 8 anhebbaren und absenkbaren Lastteil 4 auf. Das lenkbare Rad 3 kann als Antriebsrad ausgebildet sein, das von einem elektrischen Fahrantrieb angetrieben wird.

Der Lastteil 4 umfasst bevorzugt zwei seitlich beabstandete Lastarme 5a, 5b. Die Lastarme 5a, 5b sind an den Spitzen jeweils mit einer Lastrolleneinrichtung 6 versehen. Die Lastrolleneinrichtung 6 kann als Einzelrolle mit einer Lastrolle oder als Doppelrolle mit zwei Lastrollen ausgebildet sein.

Das Flurförderzeug 1 stützt sich mit dem lenkbaren Rad 3 und den an den Spitzen der beiden Lastarme 5a, 5b angeordneten Lastrolleneinrichtungen 6 auf einer Fahrbahn FB ab.

Die Initialhubvorrichtung 8 zum Anheben und Absenken des Lastteils 4 umfasst eine Hubeinrichtung 7, beispielsweise ein oder mehrere Hydraulikzylinder, die zwischen dem Antriebsteil 2 und dem Lastteil 4 angeordnet ist. Um die Hubbewegung des Lastteils 4 auf die Lastrolleneinrichtung 6 an den Spitzen der Lastarme 5 zu übertragen, umfasst die Initialhubvorrichtung 8 für jeden Lastarm 5a, 5b ein mit der entsprechenden Lastrolleneinrichtung 6 in Wirkverbindung stehendes Gestänge 10 und einen das Gestänge 10 betätigenden Betätigungshebel 11. Das Gestänge 10 steht zum Betätigen der Lastrolleneinrichtung 6 mit einem Lastrollenhebel 13 der Initialhubvorrichtung 8 in Wirkverbindung. Die Lastrolleneinrichtung 6 ist jeweils an dem Lastrollenhebel 13 drehbar angeordnet, der an dem entsprechenden Lastarm 5a, 5b schwenkbar angeordnet ist.

Der Lastteil 4 umfasst weiterhin ein kastenartiges Batteriefach 9 für eine Traktionsbatterie, die einen elektrischen Fahrantrieb des als Antriebsrad ausgebildeten gelenkten Rades 3 und einen elektrischen Antrieb der Hubeinrichtung 7 mit elektrischer Energie versorgt.

Der Lastrollenhebel 13 ist an einem Schwenklager 14 an dem Lastarm 5a bzw. 5b um eine horizontale Schwenkachse S schwenkbar gelagert. Die Lastrolleneinrichtung 6 ist an dem Lastrollenhebel 13 um eine Drehachse D drehbar gelagert. Das Gestänge 10 ist an dem Lastrollenhebel 13 an einem Koppelpunkt K gelenkig angekoppelt.

Der Betätigungshebel 11 ist erfindungsgemäß an einem an dem jeweiligen Lastarm 5a bzw. 5b ausgebildeten Lagerflansch 20 um eine horizontale Schwenkachse S1 drehbar gelagert.

Der Betätigungshebel 11 ist weiterhin an dem Antriebsteil 2 an einem Koppelpunkt K1 gelenkig angekoppelt. Das Gestänge 10 ist an dem Betätigungshebel 11 an einem zweiten Koppelpunkt K2 gelenkig angekoppelt. Die Betätigungshebel 11 sind im dargestellten Ausführungsbeispiel als zweiarmige Hebel ausgebildet, die an einem ersten Hebelarm den Koppelpunkt K1 und einem zweiten Hebelarm den Koppelpunkt K2 aufweisen. Die Betätigungshebel 11 sind hierbei als Winkelhebel ausgebildet, bei denen die beiden Hebelarme abgewinkelt zueinander angeordnet sind.

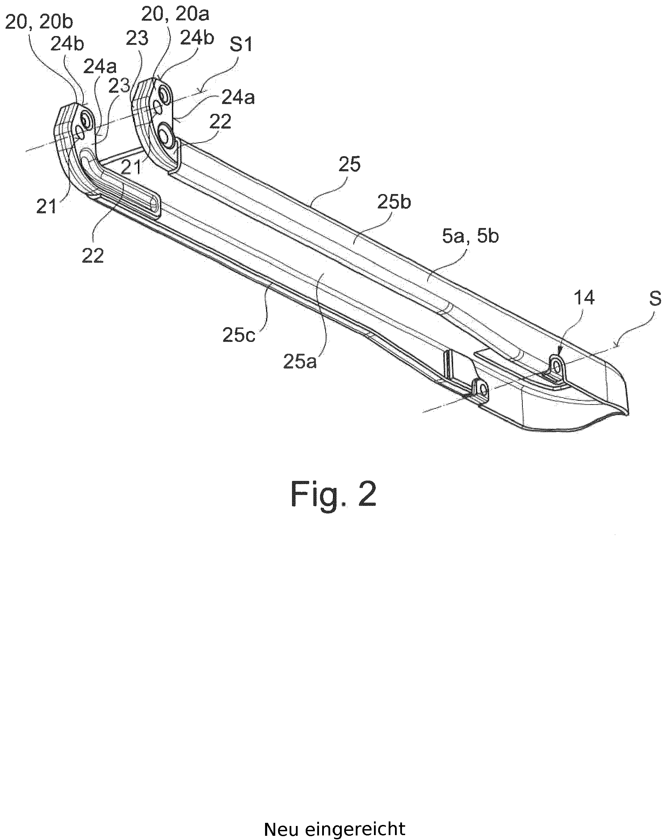

In der Figur 2 ist ein Lastarm 5a, 5b des erfindungsgemäßen Flurförderzeugs 1 dargestellt. Der Lastarm 5a, 5b weist ein Tragprofil 25 auf, das eine ebene Oberseite 25a und U-förmige Seitenteile 25b, 25c umfasst. An der Spitze des Lastarms 5a, 5b ist das Schwenklager 14 ausgebildet, in dem der Lastrollenhebel 13 um die horizontale Schwenkachse S schwenkbar gelagert ist. An dem dem Antriebsteil 2 zugewandten Ende ist der Lastarm 5a, 5b mit dem Lagerflansch 20 versehen, in dem der Betätigungshebel 11 um die horizontale Schwenkachse S1 schwenkbar gelagert ist. Im dargestellten Ausführungsbeispiel ist der Lagerflansch 20 von zwei seitlich beabstandeten Flanschelementen 20a, 20b gebildet. Die Flanschelemente 20a, 20b sind jeweils mit einer die horizontale Schwenkachse S1 bildenden Aufnahmebohrung 21 versehen, in denen ein entsprechender Lagerbolzen aufgenommen werden kann, auf dem der Betätigungshebel 11 gelagert ist.

Die Flanschelemente 20a, 20b sind im dargestellten Ausführungsbeispiel als separate Bauteile ausgebildet, die an dem Tragprofil 25 des Lastarms 5a, 5b befestigt sind. Die Flanschelemente 20a, 20b weisen im dargestellten Ausführungsbeispiel einen ersten Abschnitt 22 auf, mit dem die Flanschelemente 20a, 20b an dem entsprechenden Tragprofil 25 des Lastarms 5a, 5b befestigt sind, und einen im Wesentlichen senkrecht zu dem ersten Abschnitt 22 angeordneten zweiten Abschnitt 23 auf, in dem die die horizontale Schwenkachse S1 bildende Aufnahmebohrung 21 ausgebildet ist.

Die Flanschelemente 20a, 20b sind im dargestellten Ausführungsbeispiel mit dem ersten Abschnitt 22 in die U-förmigen Seitenteile 25b, 25c des Tragprofils 25 des Lastarms 5a, 5b einschiebbar und an dem ersten Abschnitt 22 mit dem Tragprofil 25 des Lastarms 5a, 5b verschweißt. Die Flanschelemente 20a, 20b sind bevorzugt als Schmiedeteil ausgebildet.

Die Flanschelemente 20a, 20b weisen an dem zweiten Abschnitt 23 jeweils eine vertikale Anschlussfläche 24a und eine horizontale Anschlussfläche 24b auf, mit denen die Flanschelemente 20a, 20b beim Zusammenbau der Lastarme 5a, 5b mit einem Batteriefach 9 zu einem Lastteil 4 verschweißt werden.

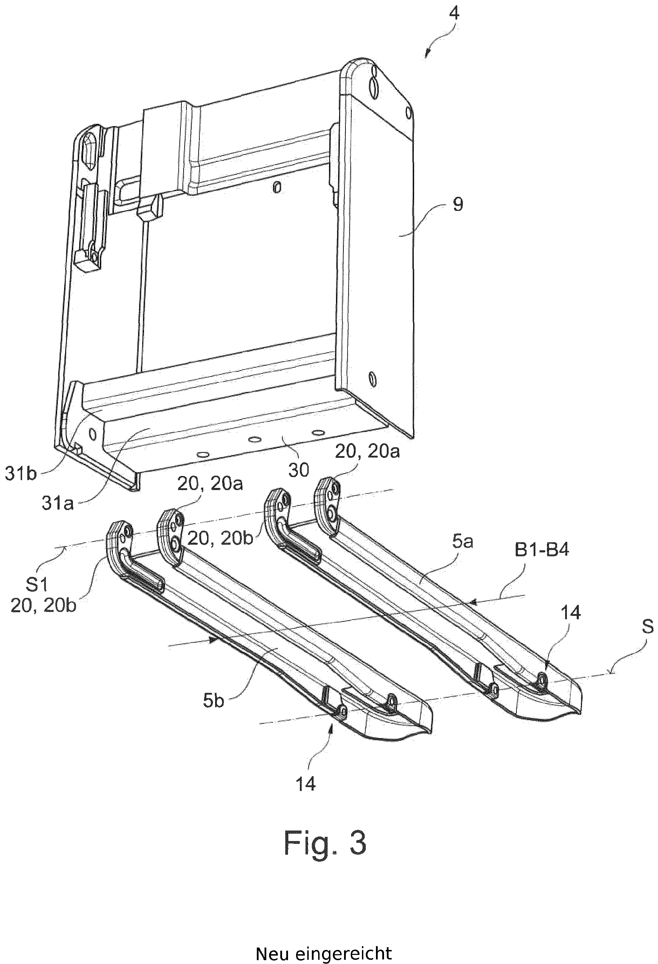

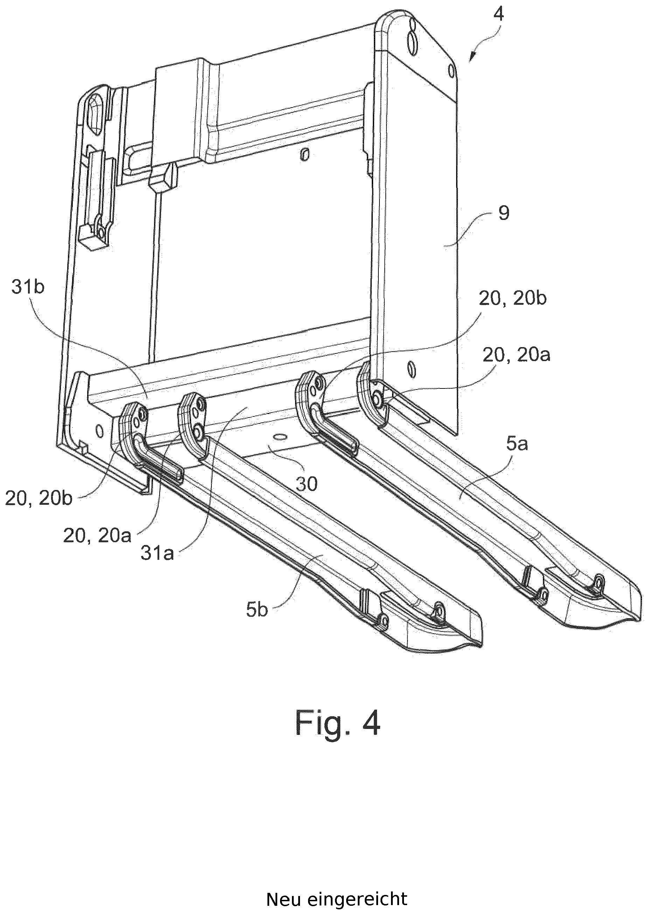

In der Figur 3 ist der Zusammenbau von zwei Lastarmen 5a, 5b, die jeweils mit einem entsprechenden Lagerflansch 20 für den Betätigungshebel 11 versehen sind, und eines Batteriefachs 9 zu einem entsprechenden Lastteil 4 dargestellt. In der Figur 4 ist der entsprechende Lastteil 4 in einem zusammengebauten Zustand dargestellt.

Das Batteriefach 9 wird hierzu mit einer Bodenfläche 30 auf die Oberseiten 25a der beiden Lastarme 5a, 5b aufgesetzt und an der Oberseite 25a an dem jeweiligen Lastarm 5a, 5b befestigt, beispielsweise verschweißt, wie aus der Figur 4 ersichtlich ist. Hierzu kann eine entsprechende Schweißvorrichtung vorgesehen sein, in die die beiden Lastarme 5a, 5b und/oder das Batteriefach 9 eingelegt und entsprechend für den Schweißvorgang positioniert sind.

Das Batteriefach 9 weist weiterhin eine vertikale Anschlussfläche 31a und eine horizontale Anschlussfläche 32b auf, wobei - wie aus der Figur 4 ersichtlich ist - die vertikale Anschlussfläche 24a der Flanschelemente 20a, 20b an der vertikalen Anschlussfläche 31a des Batteriefachs 9 anliegt und die horizontale Anschlussfläche 24b der Flanschelemente 20a, 20b an der horizontalen Anschlussfläche 31b des Batteriefachs 9 anliegt. Die vertikalen Anschlussflächen 24a der Flanschelemente 20a, 20b können hierdurch mit der vertikalen Anschlussfläche 31a des Batteriefachs 9 verschweißt werden und die horizontalen Anschlussflächen 24b der Flanschelemente 20a, 20b mit der horizontalen Anschlussfläche 31b des Batteriefachs 9 verschweißt werden, um eine stabile Befestigung der Flanschelemente 20a, 20b zu erzielen.

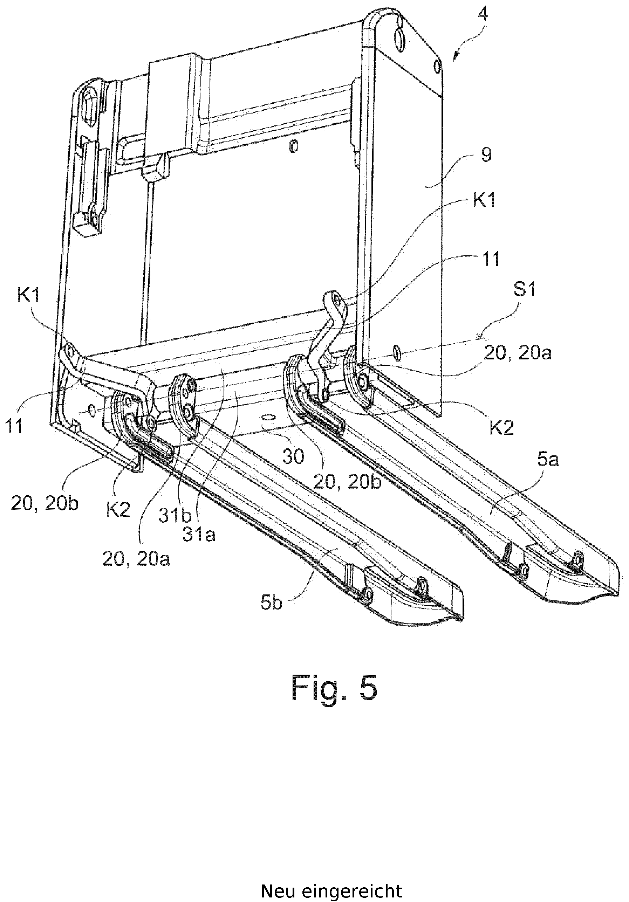

In der Figur 5 ist dargestellt, wie an dem aus der Figur 4 zusammengebauten Lastteil 4 an den Flanschelementen 20a, 20b der Lastarme 5a, 5b die entsprechenden Betätigungshebel 11 um die Schwenkachse S1 verschwenkbar gelagert sind. Der von den Flanschelementen 20a, 20b gebildete Lagerflansch 20 und somit die Schwenkachse S1 der Betätigungshebel 11 ist somit in die Lastarme 5a, 5b integriert.

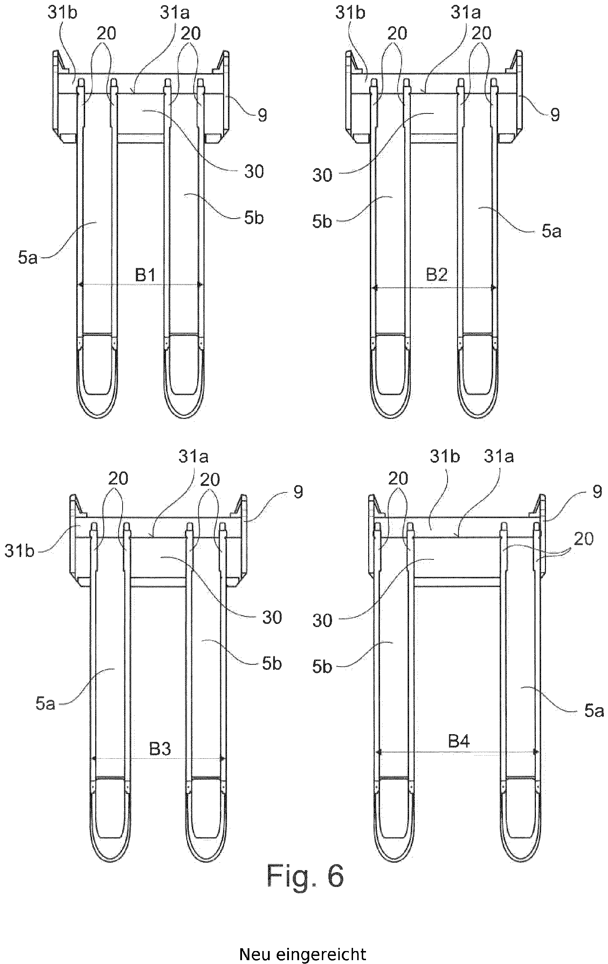

Zur Herstellung eines Lastteils 4 eines erfindungsgemäßen Flurförderzeugs 1 werden in einem ersten Schritt entsprechende Lastarme 5a, 5b gemäß der Figur 2 hergestellt, indem an den Tragprofilen 25 der Lastarme 5a, 5b jeweils die beiden Flanschelemente 20a, 20b angeschweißt werden. In einem darauffolgenden zweiten Schritt werden zwei jeweils mit den entsprechenden Flanschelementen 20a, 20b versehene Lastarme 5a, 5b - wie in der Figur 3 dargestellt ist - mit einem Batteriefach 9 zusammengepaart, um ein aus dem Batteriefach 9 und den beiden Lastarmen 5a, 5b gebildetes Lastteil 4 herzustellen. In diesem Schritt können die beiden Lastarme 5a, 5b in einem individuellen seitlichen Abstand B1-B4 (Figur 6) positioniert werden. Es wird somit ermöglicht, in diesem Schritt einen entsprechenden seitlichen Abstand B1-B4 der beiden Lastarme 5a, 5b frei bzw. beliebig zu wählen. Für das Zusammenpaaren der beiden Lastarme 5a, 5b mit einem Batteriefach 9 können die Lastarme 5a, 5b und/oder das Batteriefach 9 in eine entsprechende Schweißvorrichtung eingelegt werden. Die Schweißvorrichtung ist hierbei derart ausgeführt, dass die entsprechenden verschiedenen seitlichen Abstände B1-B4 der beiden Lastarme 5a, 5b ermöglicht werden. In einem darauffolgenden dritten Schritt werden die mit den Lagerflanschen 20 versehenen Lastarme 5a, 5b an dem Batteriefach 9 befestigt, indem entsprechende Schweißverbindungen zwischen den Lastarmen 5a, 5b und der Bodenfläche 30 des Batteriefachs 9 sowie zwischen den vertikalen Anschlussflächen 24a der Flanschelemente 20a, 20b und der vertikalen Anschlussfläche 31a des Batteriefachs 9 sowie zwischen den horizontalen Anschlussflächen 24b der Flanschelemente 20a, 20b und der horizontalen Anschlussfläche 31b des Batteriefachs 9 erzeugt werden. Die Figur 4 zeigt einen aus den beiden Lastarmen 5a, 5b und einem Batteriefach 9 zusammengebauten Lastteil 4. In einem darauf folgenden vierten Schritt können - wie in der Figur 5 dargestellt ist - an den Flanschelementen 20a, 20b die entsprechenden Betätigungshebel 11 angebaut werden.

In der Figur 6 sind hierbei Varianten von Lastteilen 4 mit verschiedenen seitlichen Abständen B1-B4 der Lastarme 5a, 5b dargestellt, die mit der Erfindung unter Verwendung eines identischen Batteriefachs 9 und somit einer Variante des Batteriefachs 9 herstellbar sind. In der Abbildung links oben der Figur 6 weisen die beiden Lastarme 5a, 5b einen seitlichen Abstand B1 auf. In der Abbildung rechts oben der Figur 6 weisen die beiden Lastarme 5a, 5b einen seitlichen Abstand B2 auf, der größer als der Abstand B1 ist. In der Abbildung links unten der Figur 6 weisen die beiden Lastarme 5a, 5b einen seitlichen Abstand B3 auf, der größer als der Abstand B2 ist. In der Abbildung rechts unten der Figur 6 weisen die beiden Lastarme 5a, 5b einen seitlichen Abstand B4 auf, der größer als der Abstand B3 ist.

Die Erfindung stellt ein modulares Konzept dar, das es ermöglicht, mit einem Minimum an Bauteilen (Lastarme 5a, 5b, die mit den Lagerflanschen 20 versehen sind; Batteriefächern 9) ein Maximum an Varianten von verschiedenen Lastteilen 4 herzustellen, da durch die Anordnung der Lagerflansche 20 an den Lastarmen 5a, 5b die Herstellung von Lastteilen 4 mit unterschiedlichen seitlichen Abständen B1-B4 der Lastarme 5a, 5b unabhängig von dem Batteriefach 9 ist. Verschiedene Varianten der Lastteile 4 mit unterschiedlichen seitlichen Abständen B1-B4 der Lastarme 5a, 5b können durch einfaches Positionieren der beiden Lastarme 5a, 5b beim Zusammenbau mit dem Batteriefach 9 hergestellt werden und benötigen keine Veränderungen an dem Batteriefach 9. Wie anhand der Figur 6 ersichtlich ist, können mit der Erfindung an einer Variante (Größenvariante) eines Batteriefachs 9 durch entsprechendes Positionieren der beiden Lastarme 5a, 5b mehrere Untervarianten von Lastteilen 4 mit verschiedenen seitlichen Abständen B1-B4 der Lastarme 5a, 5b hergestellt werden, ohne für jede Untervariante des Lastteils 4 eine entsprechende Untervariante des Batteriefachs 9 zu benötigen.

Mit der Erfindung wird eine Verringerung der Variantenzahl der Batteriefächer 9 erzielt, da nur noch verschiedene Varianten von Batteriefächern 9, die sich beispielsweise hinsichtlich der Größe für eine aufzunehmende Traktionsbatterie (Größenvarianten) unterscheiden, vorgehalten und entwickelt werden müssen. Ein unterschiedlicher seitlicher Abstand der beiden Lastarme 5a, 5b für entsprechende Untervarianten von verschiedenen Lastteilen 4, die sich hinsichtlich des seitlichen Abstands der beiden Lastarme 5a, 5b unterscheiden, kann - wie aus der Figur 6 ersichtlich ist - in einfacher Weise durch die entsprechende seitlich beabstandete Positionierung der Lastarme 5a, 5b an dem entsprechenden Batteriefach 9 hergestellt werden. Für die Untervarianten der Lastteile 4 sind somit keine zusätzlichen Untervarianten der Batteriefächer 9 erforderlich. Diese verringerte Variantenanzahl von Batteriefächern 9 führt zu einem verringerten Entwicklungsaufwand und einer schnelleren Entwicklung der erforderlichen Varianten. Weiterhin führt die verringerte Variantenanzahl von Batteriefächern 9 bei dem Hersteller der Flurförderzeuge 1 zu einem verringerten logistischen Aufwand, da eine deutlich verringerte Anzahl verschiedener Batteriefachvarianten 9 zwischengelagert werden muss, was verringerte Lagerkapazitäten zur Folge hat und eine entsprechend verringerte Anzahl an verschiedenen Teilenummern zur Folge hat. Weiterhin wird die Produktionsplanung mit einer Vorproduktion von Batteriefächern 9 erleichtert, da die entsprechenden Größenvarianten der Batteriefächer 9 es ermöglichen, alle seitlichen Abstände der Lastarme 5a, 5b abzudecken. Der Produktionsprozess der Flurförderzeuge 1 wird dadurch optimiert und flexibler. Zudem sind mit der Erfindung spezielle Kundenoptionen leicht umzusetzen, bei denen Kunden Lastteile 4 mit speziellem seitlichen Abstand der Lastarme 5a, 5b benötigen, da diese in einfacher Weise durch entsprechende seitlich beabstandete Positionierung der Lastarme 5a, 5b an dem entsprechenden Batteriefach 9 hergestellt werden können.

## Patentansprüche

1. Flurförderzeug (1), insbesondere Hubwagen, mit einem Antriebsteil (2), das mindestens ein gelenktes Rad (3) aufweist, und einem zumindest einen Lastarm (5a; 5b) und ein Batteriefach (9) umfassenden Lastteil (4), wobei der Lastarm (5a; 5b) an der Spitze mit einer Lastrolleneinrichtung (6) versehen ist, wobei sich das Flurförderzeug (1) mittels des am Antriebsteil (2) angeordneten gelenkten Rades (3) und der an der Spitze des Lastarms (5) angeordneten Lastrolleneinrichtung (6) auf einer Fahrbahn (FB) abstützt, wobei der Lastteil (4) mittels einer Initialhubvorrichtung (8) relativ zum Antriebsteil (2) anhebbar und absenkbar ist, wobei die Lastrolleneinrichtung (6) über einen Lastrollenhebel (13) schwenkbar am Lastarm (5) angeordnet ist, wobei die Initialhubvorrichtung (8) zum Anheben des Lastarms (1) ein mit dem Lastrollenhebel (13) in Wirkverbindung stehendes Gestänge (10) und einen das Gestänge (10) betätigenden Betätigungshebel (11) umfasst, **dadurch gekennzeichnet, dass** der Betätigungshebel (11) an einem an dem Lastarm (5a; 5b) ausgebildeten Lagerflansch (20) drehbar gelagert ist.

2. Flurförderzeug nach Anspruch 1, **dadurch gekennzeichnet, dass** das Batteriefach (9) mit einer Bodenfläche (30) auf die Oberseite (25a) des Lastarms (5a; 5b) aufgesetzt ist und an der Oberseite (25a) des Lastarms (5a; 5b) befestigt ist, insbesondere verschweißt ist.

3. Flurförderzeug nach Anspruch 1 oder 2, **dadurch gekennzeichnet, dass** der Lastarm (5a; 5b) an einem dem Antriebsteil (2) zugewandten Ende mit dem Lagerflansch (20) versehen ist.

4. Flurförderzeug nach einem der Ansprüche 1 bis 3, **dadurch gekennzeichnet, dass** der Lagerflansch (20) zwei seitlich beabstandete Flanschelemente (20a, 20b) umfasst.

5. Flurförderzeug nach Anspruch 4, **dadurch gekennzeichnet, dass** die Flanschelemente (20a, 20b) als Schmiedeteil ausgebildet sind, die mit dem Lastarm (5a, 5b) verschweißt sind.

6. Flurförderzeug nach Anspruch 4 oder 5, **dadurch gekennzeichnet, dass** die Flanschelemente (20a; 20b) jeweils eine vertikale Anschlussfläche (24a) und eine horizontale Anschlussfläche (24b) aufweisen, mit denen die Flanschelemente (20a; 20b) an dem Batteriefach (9) verschweißt sind.

7. Flurförderzeug nach Anspruch 6, **dadurch gekennzeichnet, dass** das Batteriefach (9) eine vertikale Anschlussfläche (31a) und eine horizontale Anschlussfläche (31b) aufweist, wobei die vertikale Anschlussfläche (24a) des Flanschelements (20a; 20b) mit der vertikalen Anschlussfläche (31a) des Batteriefachs (9) und die horizontale Anschlussfläche (24b) des Flanschelements (20a; 20b) mit der horizontalen Anschlussfläche (31b) des Batteriefachs (9) verschweißt ist.

8. Verfahren zur Herstellung eines Lastteils (4) eines Flurförderzeugs (1) nach einem der vorangegangenen Ansprüche mit den folgenden Schritten:
• Herstellen der Lastarme (5a, 5b) durch Befestigen der Lagerflansche (20) an den Lastarmen (5a, 5b);
• Zusammenpaaren von zwei Lastarmen (5a, 5b) mit einem Batteriefach (9) unter Ausbildung eines individuellen seitlichen Abstandes (B1-B4) der beiden Lastarme (5a, 5b);
• Befestigen der Lastarme (5a, 5b) an dem Batteriefach (9).

## Claims

1. Industrial truck (1), in particular lift truck, with a drive part (2) which has at least one steered wheel (3), and a load part (4) which comprises at least one load arm (5a; 5b) and a battery compartment (9), wherein the load arm (5a; 5b) is provided at the tip with a load roller device (6), wherein the industrial truck (1) is supported on a track (FB) by means of the steered wheel (3), arranged on the drive part (2), and the load roller device (6), arranged at the tip of the load arm (5), wherein the load part (4) can be raised and lowered relative to the drive part (2) by means of an initial lift apparatus (8), wherein the load roller device (6) is arranged pivotably on the load arm (5) via a load roller lever (13), wherein, in order to raise the load arm (1), the initial lift apparatus (8) comprises a linkage (10), operatively connected to the load roller lever (13), and an actuating lever (11), actuating the linkage (10), **characterized in that** the actuating lever (11) is mounted rotatably on a bearing flange (20) which is configured on the load arm (5a; 5b).

2. Industrial truck according to Claim 1, **characterized in that** the battery compartment (9) is placed with the bottom surface (30) onto the upper side (25a) of the load arm (5a; 5b), and is fastened, in particular welded, to the upper side (25a) of the load arm (5a; 5b).

3. Industrial truck according to Claim 1 or 2, **characterized in that** the load arm (5a; 5b) is provided with the bearing flange (20) at an end which faces the drive part (2) .

4. Industrial truck according to one of Claims 1 to 3, **characterized in that** the bearing flange (20) comprises two flange elements (20a, 20b) which are spaced apart laterally.

5. Industrial truck according to Claim 4, **characterized in that** the flange elements (20a, 20b) are configured as forged parts which are welded to the load arm (5a; 5b).

6. Industrial truck according to Claim 4 or 5, **characterized in that** the flange elements (20a; 20b) each have a vertical connector surface (24a) and a horizontal connector surface (24b), by way of which the flange elements (20a; 20b) are welded to the battery compartment (9) .

7. Industrial truck according to Claim 6, **characterized in that** the battery compartment (9) has a vertical connector surface (31a) and a horizontal connector surface (31b), wherein the vertical connector surface (24a) of the flange element (20a; 20b) is welded to the vertical connector surface (31a) of the battery compartment (9), and a horizontal connector surface (24b) of the flange element (20a; 20b) is welded to the horizontal connector surface (31b) of the battery compartment (9).

8. Method for producing a load part (4) of an industrial truck (1) according to one of the preceding claims, with the following steps:
• producing the load arms (5a, 5b) by way of fastening the bearing flanges (20) to the load arms (5a, 5b);
• pairing two load arms (5a, 5b) with a battery compartment (9) with configuration of an individual lateral spacing (B1-B4) of the two load arms (5a, 5b);
• fastening the load arms (5a, 5b) to the battery compartment (9).

## Revendications

1. Chariot de manutention (1), notamment chariot élévateur, avec une partie d'entraînement (2) qui présente au moins une roue directrice (3), et une partie de charge (4) comprenant au moins un bras de charge (5a ; 5b) et un compartiment de batterie (9), le bras de charge (5a ; 5b) étant pourvu à la pointe d'un dispositif de rouleau de charge (6), le chariot de manutention (1) s'appuyant sur une voie de circulation (FB) au moyen de la roue directrice (3) agencée sur la partie d'entraînement (2) et du dispositif de rouleau de charge (6) agencé à la pointe du bras de charge (5), la partie de charge (4) pouvant être soulevée et abaissée par rapport à la partie d'entraînement (2) au moyen d'un dispositif de levage initial (8), le dispositif de rouleau de charge (6) étant agencé de manière pivotante sur le bras de charge (5) par l'intermédiaire d'un levier de rouleau de charge (13), le dispositif de levage initial (8) comprenant, pour soulever le bras de charge (1), une tringlerie (10) en liaison active avec le levier de rouleau de charge (13) et un levier d'actionnement (11) actionnant la tringlerie (10), **caractérisé en ce que** le levier d'actionnement (11) est monté à rotation sur une bride de palier (20) réalisée sur le bras de charge (5a ; 5b).

2. Chariot de manutention selon la revendication 1, **caractérisé en ce que** le compartiment de batterie (9) est posé avec une surface de fond (30) sur le côté supérieur (25a) du bras de charge (5a ; 5b) et est fixé, notamment soudé, au côté supérieur (25a) du bras de charge (5a ; 5b) .

3. Chariot de manutention selon la revendication 1 ou 2, **caractérisé en ce que** le bras de charge (5a ; 5b) est pourvu de la bride de palier (20) à une extrémité tournée vers la partie d'entraînement (2).

4. Chariot de manutention selon l'une quelconque des revendications 1 à 3, **caractérisé en ce que** la bride de palier (20) comprend deux éléments de bride (20a, 20b) espacés latéralement.

5. Chariot de manutention selon la revendication 4, **caractérisé en ce que** les éléments de bride (20a, 20b) sont réalisés sous forme de pièce forgée qui est soudée au bras de charge (5a ; 5b).

6. Chariot de manutention selon la revendication 4 ou 5, **caractérisé en ce que** les éléments de bride (20a ; 20b) présentent chacun une surface de raccordement verticale (24a) et une surface de raccordement horizontale (24b) avec lesquelles les éléments de bride (20a ; 20b) sont soudés au compartiment de batterie (9).

7. Chariot de manutention selon la revendication 6, **caractérisé en ce que** le compartiment de batterie (9) présente une surface de raccordement verticale (31a) et une surface de raccordement horizontale (31b), la surface de raccordement verticale (24a) de l'élément de bride (20a ; 20b) étant soudée à la surface de raccordement verticale (31a) du compartiment de batterie (9) et la surface de raccordement horizontale (24b) de l'élément de bride (20a ; 20b) étant soudée à la surface de raccordement horizontale (31b) du compartiment de batterie (9).

8. Procédé de fabrication d'une partie de charge (4) d'un chariot de manutention (1) selon l'une quelconque des revendications précédentes, avec les étapes suivantes :
- la fabrication des bras de charge (5a, 5b) par fixation des brides de palier (20) aux bras de charge (5a, 5b) ;
- l'appariement de deux bras de charge (5a, 5b) avec un compartiment de batterie (9) en formant une distance latérale individuelle (B1-B4) des deux bras de charge (5a, 5b) ;
- la fixation des bras de charge (5a, 5b) au compartiment de batterie (9).
